# EUROPEAN PATENT APPLICATION

(11) **EP 1 852 488 A1**
(43) Date of publication of application: **07.11.2007**
(21) Application number: 06009008.1
(22) Date of filing: 01.05.2006
(51) Int. Cl.: C09K 11/79, C09K 11/85

(54) **Phosphorescent compounds**

(71) Applicant: Association Suisse pour la Recherche Horlogère, 2002 Neuchâtel (CH)
(72) Inventor: Kubel, Frank, 1070 Vienne (AT); Bowen, Paul, 1260 Nyon (CH)
(74) Representative: Thérond, Gérard Raymond

(57) **Abstract**

The compounds have a matrix with the general formula M₂SiO₄ wherein M represents an alkaline earth such as barium, strontium or calcium, said matrix being doped with europium and co-doped with at least one other lanthanide such as praseodymium, samarium, dysprosium or holmium.
The dopant compounds are introduced into the matrix in the form of fluorides by calcination in a reducing atmosphere.
Application in the field of horology.

## Description

### Field of the invention

The present invention concerns phosphorescent compounds having as a matrix an alkaline earth silicate which are doped with europium and co-doped with at least one other rare earth in the form of fluorides or an element creating defects and disconformities in the structure such as boron, nitrogen or phosphorus. The invention also concerns a method for performing synthesis in the best conditions providing a favourable effect on the afterglow.

### Background of the invention

Phosphorescent compounds are compounds which accumulate a certain "energy potential" via illumination by natural light, and which they return in the form of visible light when they are placed in the dark, the determining criteria being, amongst other things, chemical stability, safety during handling and afterglow, i.e. the period of time during which the light will be emitted in the dark. The phosphorescent properties of doped sulphates have been known for a long time.

For example, in a non-limiting manner, one could cite Zn S:Cu emitting a yellow-green light, (Ca, Sr) S:Bi emitting a bluish light, (Zn, Cd) S:Cu emitting a red light. These phosphorescent compounds have however gradually been abandoned, either because of the poor chemical stability, particularly in damp conditions, or because of their poor performance as regards afterglow and brightness, or their toxicity if they include cadmium. For this same last reason, tritium based compositions have also been abandoned because of proven risks both as regards the manufacturer and the wearer because of radioactivity.

In order to overcome the aforementioned drawbacks, numerous patents propose compounds including a matrix formed by an oxide in which rare earth atoms can be inserted capable of passing from one excitation level to another, depending upon whether they receive luminous irradiation or they are placed in the dark. EP Patent No. 0 662 440 can, for example, be cited, wherein the matrix is an alkaline earth aluminate.

A certain number of other Patents disclose more complex matrices in which silicon may be present. In a non-limiting manner, EP Patent No. 0 877 070 can be cited, in which the closest formula to the present invention would be mSrO.nMgO.2 Si O₂: Euₓ, Ln_{y}, in which m and n are not equal to zero.

To the best knowledge of the Applicant, no prior document discloses a matrix of phosphorescent compounds composed only of an alkaline earth silicate.

### Brief description of the invention

It is thus an object of the present invention to provide new phosphorescent compounds which are chemically stable, whatever the environmental conditions, which are not toxic and thus can be handled without any risks, which offer a sufficient colour pallet and which have relatively strong afterglow and intensity.

The invention therefore concerns a family of phosphorescent compounds including a silicate based matrix with the general formula M₂ Si O₄ in which M represents an alkaline earth, such as barium, strontium or calcium, the said matrix being doped with europium and co-doped with at least one other lanthanide (Ln) in the form of fluorides.

The said phosphorescent compounds may be represented by the formula M₂ₓ Si O₄ : Euₐ, Ln_{b} wherein x, a and b represent molar proportions such that x = a+b, M and Ln having the aforesaid meaning. The value of a for europium is preferably comprised between 0,1% and 0,5%.

Among the preferred lanthanides are praseodymium, samarium, dysprosium and holmium and more particularly dysprosium when the host matrix alkaline earth is strontium. The dopants and co-dopants can be present in molar proportions comprised between 0.1% and 2.0% and preferably around 0.4%.

According to another aspect of the invention, in a first step Si O₂ and an alkaline earth carbonate or acetate are calcined. The phosphorescent compounds are obtained by a method in which, the dopants and co-dopants are introduced in the form of fluorides in this first step or in the next step consisting in continuing the heating at a more moderate temperature in a reducing atmosphere composed for example of a N₂/H₂ mixture.

The compounds thereby obtained, which have the properties desired for the phosphorescent compounds, are then treated via methods known in the powder grinding field, for example by a ball mill, and by sieving to obtain a particle size within a determined range.

The powders thereby obtained can then be incorporated into various supports or into various compositions or emulsions.

### Detailed description

### Example 1: Phosphorescent compounds with a barium silicate (Ba₂SiO₄) matrix

Barium acetate [Ba (C₂H₃O₂)₂] and silicon dioxide [SiO₂] are ground in a platinum, graphite or alumina crucible that is placed in a tunnel furnace whose temperature is brought to 1200°C. Boron sesquioxyde [B₂O₃] could be added to lower the temperature of the liquid phase and/or to introduce disconformities necessary for phosphorescence into the structure.

Europium is then added in the form of fluoride [Eu F₃] as dopant and dysprosium also in the form of fluoride [Dy F₃] as co-dopant, then the crucible is returned to the furnace at a temperature of around 900°C maintaining a reducing atmosphere constituted by the N₂/H₂ mixture.

Experiments have shown that, in this step of the method, the molar percentages of each fluoride have to be preferably around 0.4% to obtain the greatest phosphorescent effect. In fact it has been observed that with calcination at 900°C, contrary to what might be expected, a greater concentration of fluorides causes a decrease in intensity.

At the end of this step, the obtained product is ground, then the powder is calibrated by sieving.

Other phosphorescent compounds were also prepared with a barium silicate matrix using other lanthanides as co-dopants, such as praseodymium, samarium and holmium, still in the form of fluorides.

Praseodymium proved to be the co-dopant providing the greatest phosphorescence with molar percentages of respectively 0.40% for EuF₃ and 0.39% for PrF₃. This green-coloured phosphorescent compound has peaks at 254 nm and 366 nm with relatively strong phosphorescence and residual afterglow.

### Example 2: Phosphorescent compounds with a strontium silicate matrix [Sr₂SiO₄]

According to a slightly different protocol to that of example 1, strontium carbonate [SrCO₃], silicon dioxide [SiO₂], europium fluoride [EuF₃], in a proportion of 0.42% and dysprosium fluoride [DyF₃], in a proportion of 0.41% were mixed and ground in a crucible, then the mixture was calcined in a tunnel furnace at 1350°C. Said mixture was then placed in a reducing atmosphere and heated at 1000°C for 2 hours to obtain a phase β strontium silicate matrix.

The powder obtained after grinding and sieving, of a slightly yellow tinged white colour, has peaks at 254 nm and 366 nm with strong phosphorescence over a long period of time.

Other compounds were prepared replacing the dysprosium fluoride with samarium or holmium fluorides.

### Example 3: Phosphorescent compounds with a calcium silicate matrix [Ca₂SiO₄]

According to a comparable protocol to that of example 2, but with calcination carried out for 12 hours at 1450°C in air, from a calcium carbonate [CaCO₃], silicon dioxide [SiO₂], europium fluoride [EuF₃] in a molar proportion of 0.42% and holmium fluoride [HoF₃] in a molar proportion of 0.40%, a yellow-green powder is obtained having a y phase matrix with peaks at 354 nm and 366 nm, and showing relatively strong phosphorescence and afterglow.

Other compounds were prepared replacing the holmium fluoride with other lanthanide fluorides, such as samarium or dysprosium fluorides.

In examples 1 to 3 that have just been described, the matrix is obtained by a solid-solid reaction. This is the preferred method, but other methods could also be used, such as the sol-gel method.

Likewise, the introduction of lanthanide atoms as dopants or co-dopants in the form of fluorides constitutes the preferred synthesis mode since it creates a strong polar field locally. However, the fluorides could also be replaced by lanthanide oxides.

Once the powder has been obtained by grinding and sieving, it can be incorporated into the finished or semi-finished product such as glass, a plastic material etc., each time that the said products need to be visible at night after having been exposed to the light of day.

The phosphorescent powder can also be incorporated into a lacquer, paint or varnish composition to be applied to a particular object.

The field of horology is a particularly advantageous field of application for making watch parts such as the dial and/or the hands and/or the hour symbols visible at night without using energy. Given the small dimensions to be covered, the relatively high cost of the phosphorescent compounds incorporating rare earths actually has very little effect on the cost price of the timepiece.

## Claims

1. Phosphorescent compound, including a silicate based matrix with a formula M₂SiO₄ wherein M represents an alkaline earth such as barium, strontium or calcium, the said matrix being doped with europium and co-doped with at least one other lanthanide (Ln) in the form of a fluoride and/or an element creating disconformities in the structure.

2. Phosphorescent compound according to claim 1, **characterized in that** the lanthanide (Ln) for co-doping the matrix is selected from among praseodymium, samarium, dysprosium and holmium or a mixture thereof.

3. Phosphorescent compound according to claims 1 or 2, having the formula M₂₋ₓSiO₄:EUₐ,Ln_{b} wherein x, a and b represent molar proportions such that x=a+b, M and Ln having the meanings indicated hereinbefore.

4. Phosphorescent compound according to claim 3, **characterized in that** the percentage a, of europium is comprised between 0.1% and 0.5%.

5. Phosphorescent compound according to any of claims 3 or 4, **characterized in that** the percentage b of the other co-dopant lanthanide is comprised between 0.1 % and 2.0%.

6. Phosphorescent compound according to claims 4 and 5, **characterized in that** the values of a and b are close to 0.4%.

7. Phosphorescent compound according to claim 6, **characterized in that** it is selected from among compounds with a Ba₂SiO₄ matrix doped with europium and co-doped with praseodymium, with a Sr₂SiO₄ matrix doped with europium and co-doped with dysprosium, and with a Ca₂SiO₄ matrix doped with europium and co-doped with holmium.

8. Phosphorescent compound according to any of the preceding claims, **characterized in that** the luminescence peak after illumination is between 254 nm and 366 nm.

9. Synthesis method for a phosphorescent compound according to any of the preceding claims, **characterized in that** it includes the steps consisting in:
a) grinding and mixing rare earth carbonates or silicates and silicon dioxide (SiO4);
b) calcinating the mixture at a high temperature comprised between 1100°C and 1500°C;
c) adding the dopants and co-dopants in the form of fluorides, and treated in a reducing atmosphere composed of a mixture of N2/H2 at a lower temperature comprised between 900°C and 1000°C; and
d) leaving the product obtained at the preceding step to cool, grinding it and calibrating it by sieving.

10. Method according to claim 9, **characterized in that** in step c a flux is added, such as B₂O₃, to lower the temperature and create disconformities in the structure.

11. Method according to claim 9, **characterized in that**, in steps a and b the dopants and co-dopants are also added.

12. Composition including a phosphorescent compound according to any of claims 1 to 8 to be applied to a support in order to make the latter visible at night

13. Timepiece **characterized in that** at least one of its components incorporates a composition according to claim 12.
